# FASCICULE DE BREVET EUROPEEN

(11) **EP 2 528 754 B1**
(45) Date de publication et mention de la délivrance du brevet: **14.05.2014**
(21) Numéro de dépôt: 10776093.6
(22) Date de dépôt: 26.10.2010
(51) Int. Cl.: B60C 11/00, B60C 11/04

(54) **PNEU DESTINE A EQUIPER UN VEHICULE PORTANT DE LOURDES CHARGES**
REIFEN FÜR EIN SCHWERLASTFAHRZEUG
TIRE FOR A VEHICLE CARRYING HEAVY LOADS

(30) Priorité: 26.11.2009 FR 0958406
(43) Date de publication de la demande: 05.12.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BIJAOUI, Denis, Phayathai Bangkok 10400 (TH)
(74) Mandataire: Diernaz, Christian
(86) Numéro de dépôt international: PCT/EP2010/066115
(87) Numéro de publication internationale: WO 2011/064056

(56) Documents cités:
- EP-A1- 2 067 637
- EP-A1- 2 116 396
- WO-A1-2009/020066
- JP-A- 11 208 216
- JP-A- 2004 306 769

## Description

L'invention a trait aux bandes de roulement de pneus pour engins portant de lourdes charges, comme des engins de génie civil, et concerne plus particulièrement les matériaux composant ces bandes de roulement.

Un pneu pour engin de génie civil comporte en général une armature de carcasse ancrée dans des bourrelets, cette armature, composée d'au moins une nappe de renforts, étant surmontée radialement à l'extérieur par une armature de sommet. Cette armature de sommet est composée d'une pluralité de nappes de renforts croisés d'une nappe à l'autre et surmontée radialement à l'extérieur par une bande de roulement dont la fonction est d'assurer le contact entre le pneu et la surface sur laquelle roule le pneu et le transfert des efforts entre ledit pneu et ladite surface.

En usage, on constate qu'au moins deux performances sont recherchées, à savoir une bonne résistance à l'usure de la bande de roulement et une bonne endurance aux agressions des corps étrangers présents sur la surface sur laquelle roule le pneu. En effet, il est souhaitable que lors du roulage sur des surfaces substantiellement dépourvues de corps étrangers, l'usure de la bande de roulement, c'est-à-dire la quantité de matière qui est usée et enlevée par frottement soit la plus réduite possible pour une distance de parcours donnée.

D'autre part, l'usage sur des terrains présentant de nombreux cailloux et autres corps génère des agressions de la bande de roulement. Pour des engins portant de lourdes charges comme des engins de travaux génie civil utilisés dans des mines, il est connu que les bandes de roulement des pneus équipant ces véhicules sont soumises à des chocs répétitifs qui peuvent provoquer, outre des arrachements de matière de la bande de roulement, des cassures par décollement entre les différents matériaux du sommet du pneu, notamment entre la bande de roulement et l'armature de renforcement du sommet.

Il était connu, notamment du document de brevet FR1445678 que l'on pouvait adapter selon des régions de la bande de roulement les performances et caractéristiques des matériaux constitutifs de ladite bande. Ce document indique que la partie centrale d'une bande de roulement peut être réalisée en matériau ayant une résistance à l'usure supérieure à celle du matériau formant les parties latérales et ce même matériau formant la région centrale ayant une moindre adhérence que le matériau des parties latérales.

Le document WO-A-2009 020066 (voir fig. 4) décrit une bande de roulement formée par trois matériaux différents (2B, 2C, 2S).

L'objet de l'invention concerne une bande de roulement pour engins de génie civil qui permet à la fois d'équilibrer les performances d'usure, de résistance aux chocs de la bande tout en améliorant la performance d'endurance des parties de bord de ladite bande de roulement.

Le pneu selon l'invention est destiné à équiper un véhicule portant de lourdes charges et roulant sur des terrains comportant de nombreuses irrégularités ; ce pneu comprend une armature de carcasse ancrée dans des bourrelets, ces bourrelets étant destinés à venir en contact avec une jante de montage. Cette armature de carcasse est, radialement à l'extérieur, surmontée d'une structure sommitale comprenant une armature de renforcement de sommet elle même surmontée radialement à l'extérieur par une bande de roulement destinée à assurer le contact par roulement avec le sol.

Cette bande de roulement est pourvue, de part et d'autre d'un plan médian, de rainures de profondeur moyenne P et d'orientation générale transversale comprenant deux extrémités, une première extrémité débouchant vers l'extérieur de la bande et une deuxième, dite extrémité interne, ne débouchant pas. L'extrémité interne de chaque rainure transversale est située à une distance non nulle du plan médian de la bande.

On définit sur cette bande une partie médiane comprise axialement entre les extrémités internes des rainures, transversales. Cette partie médiane a une largeur Lc au moins égale à 20% de la largeur totale W de la bande de roulement et au plus 80% de cette largeur. Axialement de part et d'autre de cette partie médiane, on trouve des parties de bord.

Cette bande de roulement est formée par trois matériaux caoutchoutiques ayant des propriétés spécifiques différentes :
- un premier matériau est disposé sur une largeur au moins égale à 80% de la largeur Lc de la partie médiane et au plus 80% de la largeur W totale de la bande, et sur une épaisseur P1 égale à au moins 20% et au plus 80% de la profondeur moyenne P des rainures transversales,
- un second matériau situé axialement à l'extérieur de la partie médiane sur une profondeur P2 égale ou sensiblement égale à la profondeur P1
- un troisième matériau situé radialement à l'intérieur de l'ensemble de la partie médiane et des parties de bord, ce troisième matériau s'étendant sur une profondeur au moins égale à la différence entre la profondeur P des rainures transversales et l'épaisseur P1 du premier matériau.

Ces trois matériaux de la bande sont choisis de façon à avoir les propriétés suivantes :
- le premier matériau a un module sécant à 10% d'allongement mesuré sous une température de 23°C au moins égal à 4.0 MPa et des pertes hystérétiques tan(δ)ₘₐₓ (pertes mesurées à 60 °C sur un viscoanalyseur Metravib V A4000 selon la norme ASTM D 5992 - 96) supérieures à 0.19 ;
- le deuxième matériau a un module sécant à 10% d'allongement, mesuré à 23 °C, inférieur à celui du premier matériau, et une valeur de pertes hystérétiques tan(δ)ₘₐₓ inférieure à celle du premier matériau et au moins égale à 0.15 ;
- le troisième matériau est très faiblement hystérétique, c'est-à-dire ayant une valeur de pertes hystérétiques tan(δ)ₘₐₓ inférieure à 0.12.

En outre, le premier matériau a une résistance à l'usure qui est au moins 15% supérieure à celle du deuxième et troisième matériaux, ces deux derniers matériaux ayant sensiblement la même résistance à l'usure.

La performance à l'usure d'un matériau est évaluée par le rapport (exprimé en pourcentages - %) entre la perte de poids du matériau de référence et la perte de poids du matériau à tester. Cette mesure est réalisée sur une machine d'érosion. Un échantillon "patin" glisse sur une piste circulaire pourvue d'un revêtement de type sol réel correspondant à l'usage du pneu portant de lourdes charges. Les paramètres imposés sont la force de contact perpendiculaire à la surface de contact du patin sur la piste, la vitesse de glissement du patin, la longueur glissée et la température de l'enceinte dans laquelle est réalisée la mesure.

En outre, le premier matériau est très cohésif c'est-à-dire que les contraintes à rupture (exprimées en Mpa) et les allongements à la rupture (exprimés en %) mesurés à 60°C sont sensiblement plus élevés que les contraintes à rupture et les allongements à la rupture de ceux des autres matériaux d'au moins 20%.

Grâce à cet agencement spécifique de matériaux dans la bande de roulement il est possible d'obtenir une amélioration significative des performances de résistance à l'usure, de résistance aux agressions et d'endurance par rapport au pneu de l'art antérieur et notamment au pneu décrit dans le document de brevet FR1445678.

Préférentiellement, le premier matériau a une forme trapézoïdale en section méridienne de manière à ce que sa largeur de contact avec le sol augmente progressivement avec l'usure.

Selon une variante intéressante, le troisième matériau comporte, de part et d'autre du plan médian de la bande de roulement, une surépaisseur d'environ 20% de son épaisseur moyenne. Cette surépaisseur a une largeur égale à au moins 5% de la largeur totale W de la bande de roulement et est située à une distance supérieure à 10% de largeur totale W par rapport au plan médian. Grâce à cet ajout de matériau très peu hystérétique comparativement au premier matériau de la partie centrale, il est possible de réduire la température de fonctionnement du pneu dans les zones où sont présentes ces surépaisseurs et ainsi d'améliorer son endurance.

Dans une autre variante de pneu selon l'invention, la bande de roulement comprend un quatrième matériau disposé entre l'armature de sommet et le troisième matériau sur toute la largeur de ce troisième matériau. Ce quatrième matériau est choisi pour avoir les propriétés suivantes :
- un module sécant en extension à 10% d'allongement et pour une température de 23 °C égal à 4.0 MPa,
- une valeur de pertes hystérétiques tan(δ)ₘₐₓ inférieure à 0.11

Ce quatrième matériau a une épaisseur supérieure à 15% de l'épaisseur du premier matériau.

D'autres caractéristiques et avantages de l'invention ressortent de la description faite ci-après en référence aux dessins annexés qui montrent, à titre d'exemples non limitatifs, des formes de réalisation de l'objet de l'invention.
La figure 1 montre une vue en plan d'une sculpture de bande de roulement d'un pneu selon l'invention ;
La figure 2 montre une coupe partielle selon la ligne II-II du pneu montré à la figure 1 ;
La figure 3 montre une autre variante de pneu selon l'invention montrant un profil spécifique du troisième matériau ;
La figure 4 montre une vue en plan de la surface de roulement d'une variante de bande de roulement selon l'invention ;
La figure 5 montre, en coupe selon une ligne V-V prise sur le pneu montré à la figure 4, une variante de pneu selon l'invention comprenant un quatrième matériau radialement à l'intérieur du troisième matériau de la bande de roulement.

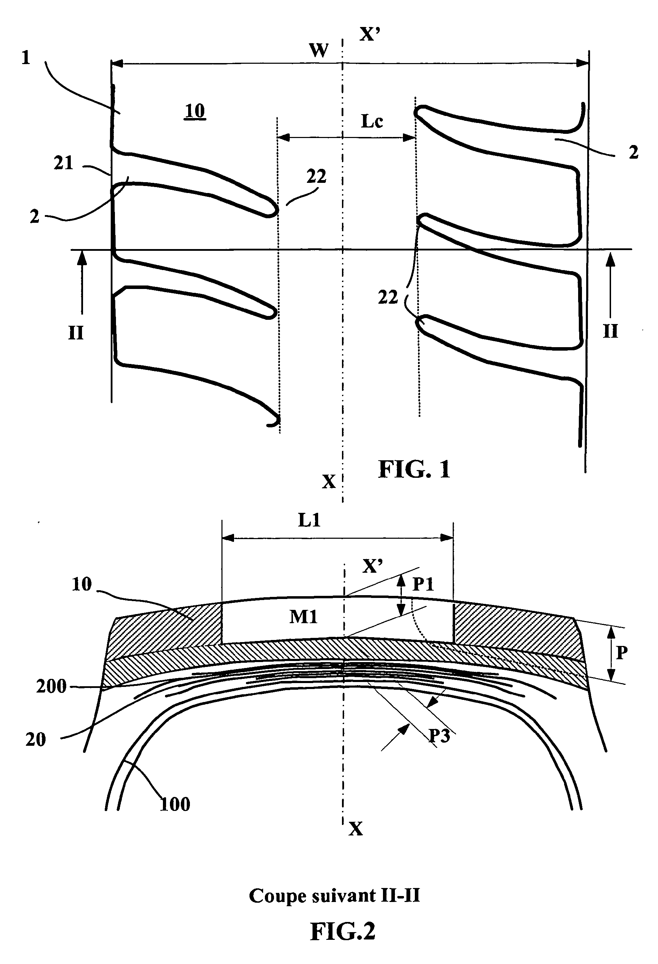

La figure 1 montre la surface de roulement 10 d'une bande de roulement 1 d'un pneu selon l'invention. Cette bande de roulement est de largeur totale W et présente un plan médian (dont l'intersection avec le plan de la figure 1 est repérée par la ligne XX') divisant sensiblement la bande en deux moitiés de largeurs axiales égales.

Cette bande de roulement 1 comprend de part et d'autre du plan médian XX' une pluralité de rainures transversales 2 orientées sensiblement dans la direction transversale, c'est-à-dire avec un angle inférieur à 45° avec l'axe de rotation (axe de direction perpendiculaire à la direction XX'). Chaque rainure transversale 2 a une profondeur moyenne et comprend deux extrémités 21, 22 dont l'une, l'extrémité externe 21, axialement à l'extérieur débouche sur un bord de la bande et l'autre, l'extrémité interne 22, axialement à l'intérieur ne débouche pas latéralement. Cette extrémité interne 22 est située à une distance non nulle du plan médian. On définit une partie médiane de largeur Lc s'étendant axialement entre les extrémités internes 22 des rainures transversales 2 situées de part et d'autre du plan médian XX'. Cette largeur Lc est ici sensiblement égale à 1/3 de la largeur totale W de la bande.

Avec la figure 2, on montre une vue en coupe dans un plan radial (c'est-à-dire un plan contenant l'axe de rotation) dont l'intersection avec le plan de la figure 1 correspond à la ligne II-II montrée sur la figure 1. On voit que le pneu comprend une armature de carcasse 100 surmontée radialement à l'extérieur par une structure sommitale 200 comprenant d'une part une armature de sommet 20 formée d'une pluralité de nappes de renforcement et d'autre part, surmontant radialement à l'extérieur cette armature de sommet 20 une bande de roulement 10, cette dernière étant formée de trois matériaux à base de caoutchouc.

Sur une largeur L1 supérieure à la largeur Lc de la partie médiane, on voit un premier matériau M1 qui est situé de part et d'autre du plan médian XX' ; cette largeur L1 est égale à environ 60% de la largeur totale W de la bande. Ce premier matériau M1 s'étend sur une épaisseur moyenne P1 égale à 70% de la profondeur moyenne P des rainures transversales, cette épaisseur moyenne P1 étant mesurée sur le plan médian. Ce premier matériau M1 a un module sécant à 10% d'allongement mesuré sous une température de 23°C au moins égal à 4.0 MPa et des pertes hystérétiques tan(δ) ₘₐₓ supérieures à 0.19.

Un second matériau M2 est situé axialement à l'extérieur et de part et d'autre de la partie médiane sur une épaisseur P2 égale à l'épaisseur P1. Ce deuxième matériau a un module sécant à 10% d'allongement, mesuré à 23 °C, qui est inférieur à celui du premier matériau, et une valeur de pertes hystérétiques tan(δ)ₘₐₓ inférieure à celle du premier matériau et au moins égale à 0.15.

Un troisième matériau M3 est situé radialement à l'intérieur de l'ensemble de la partie médiane et des parties de bord et s'étend sur une épaisseur P3 supérieure à la différence entre la profondeur moyenne P des rainures transversales et l'épaisseur de matériau P1 de la région centrale. Ce troisième matériau a une valeur de pertes hystérétiques tan(δ)ₘₐₓ inférieure à 0.12.

En outre, le premier matériau M1 a une résistance à l'usure qui est au moins 15% meilleure que celle des deuxième et troisième matériaux, ces deux derniers matériaux ayant sensiblement des résistances à l'usure sensiblement égales. Dans le présent document, la performance à l'usure d'un matériau est évaluée par le rapport (exprimé en pourcentages - %) entre la perte de poids du matériau de référence et la perte de poids du matériau à tester. Cette mesure est réalisée sur machine dite d'érosion. Un échantillon sous la forme d'un "patin" glisse sur une piste circulaire pourvue d'un revêtement de type sol réel correspondant à l'usage du pneu. Les paramètres de sollicitation imposés sont la force de contact perpendiculaire à la surface de contact du patin sur la piste, la vitesse de glissement du patin, la longueur glissée et la température de l'enceinte dans laquelle est réalisée la mesure. On mesure les épaisseurs restantes après usure.

Grâce à cet agencement de trois matériaux, il est possible d'obtenir à la fois une amélioration significative des performances de la bande en usure, en agressions résultant des chocs en roulage sur les obstacles rencontrés sur le sol et en endurance générale.

La présence du troisième matériau sur toute la largeur de la bande de roulement et radialement sous les premier et deuxième matériaux composant ladite bande, permet de réduire la température de fonctionnement du pneu. Dans la partie médiane, on évite ainsi les risques de séparation entre la bande de roulement et l'armature de sommet, alors que la présence de ce troisième matériau radialement sous les parties bord permet d'améliorer la résistance au décollement aux extrémités axiales de l'armature de sommet.

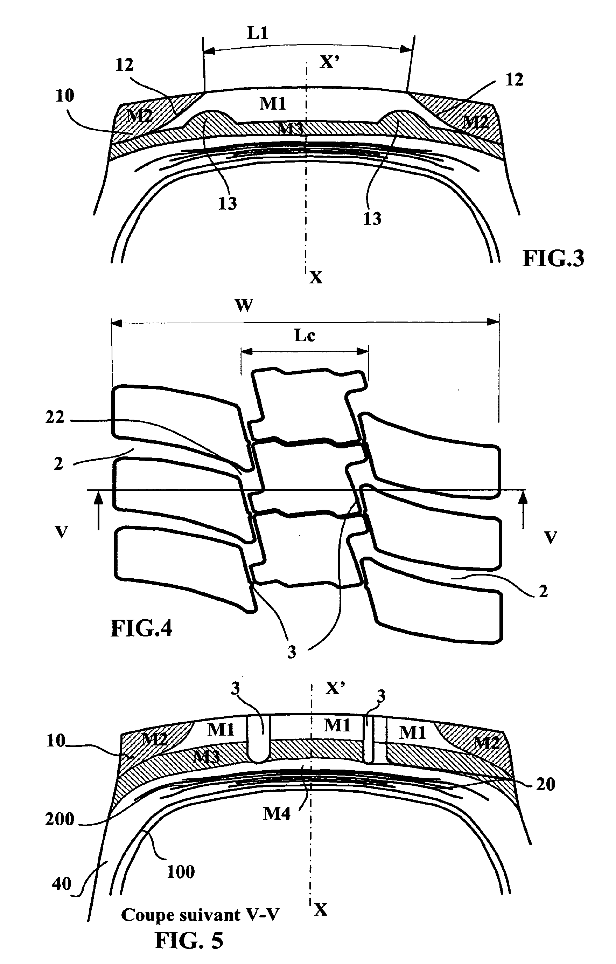

La figure 3 montre, en coupe selon un plan contenant l'axe de rotation, une variante de réalisation d'un pneu comprenant une bande de roulement selon l'invention formée de trois matériaux M1, M2, M3 comme cela a été décrit avec l'exemple précédent. Selon cette variante, les surfaces de jonction 12 entre les premier et deuxième matériaux ont, vues dans le plan de coupe contenant l'axe de rotation, des traces inclinées par rapport à la direction radiale (parallèle à la direction de l'axe XX'), le point radialement le plus à l'intérieur (c'est-à-dire le plus proche de l'axe de rotation du pneu) du premier matériau sur ces traces étant situé axialement à l'extérieur du point radialement le plus à l'extérieur du premier matériau. Ainsi, le premier matériau M1 a une forme trapézoïdale en section dans un plan de coupe radial (plan contenant l'axe de rotation) de manière à ce que sa largeur de contact avec le sol augmente progressivement avec l'usure de la bande en partant de la valeur L1 à l'état neuf de la bande (c'est-à-dire avant tout roulage).

En outre, cette variante combine cette disposition avec la présence de surépaisseurs 13 en troisième matériau M3 remplaçant partiellement le premier matériau M1. Ces deux surépaisseurs 13 ont des formes en lentille et ont respectivement une largeur de 10% de la largeur totale W de la bande de roulement et une hauteur maximale de 25% de l'épaisseur du premier matériau M1.

La figure 4 et la figure 5 montrent une même autre variante de bande selon l'invention comprenant outre les trois matériaux décrits un quatrième matériau radialement à l'intérieur. Le pneu considéré est un pneu de dimension 37.00 R 57 destiné à équiper un véhicule de travaux de génie civil roulant notamment sur des sols pouvant être agressifs vis-à-vis des matériaux de la bande de roulement.

Dans cette variante, le dessin de sculpture vu en plan montré à la figure 4 comprend, outre les rainures transversales 2 telles décrites pour les précédents exemples, deux rainures d'orientation générale circonférentielle 3. Chacune des rainures transversales 2 débouche à son extrémité interne 22 dans une rainure circonférentielle 3.

La figure 5 montre une vue partielle en coupe comportant des flancs 40 reliés à une partie de sommet 200. Ce pneu comprend une armature de carcasse 100 surmontée radialement vers l'extérieur par une armature de sommet 20 elle même surmontée par une bande de roulement 10 dont une surface est destinée à être en contact avec le sol pendant le roulage.

La bande de roulement 10 s'étend sur une largeur totale W égale à 895 mm. Cette bande est pourvue de deux rainures circonférentielles 3 s'étendant principalement dans la direction circonférentielle et d'une pluralité de rainures transversales débouchant dans les rainures circonférentielles. La bande de roulement a une épaisseur totale égale à 98 mm.

Les rainures transversales ont une même largeur moyenne égale à 12 mm et une profondeur moyenne P égale à 75 mm (cette profondeur moyenne est prise à sensiblement mi distance des extrémités interne et externe de ces une partie centrale de la bande. Ces rainures circonférentielles ont une largeur moyenne inférieure à celle des rainures transversales et une profondeur sensiblement identique à la profondeur moyenne P.

L'armature de sommet de ce pneu comprend un empilement de plusieurs nappes, deux d'entre elles, dites nappes de frettage, sont renforcées de renforts faisant un angle faible par rapport à la direction circonférentielle (par faible on entend ici inférieur à 10 degrés). Ces nappes de frettage occupent une largeur totale au moins égale à la distance minimale séparant les rainures circonférentielles. Radialement à l'extérieur de ces nappes de frettage, sont disposées des nappes de travail et des nappes de protection.

La bande de roulement du pneu montré avec la figure 4 est formée de quatre matériaux distincts.

Un premier matériau M1 est situé axialement dans toute la partie centrale de la bande sur une épaisseur P1 égale à 70 mm soit dans le cas présent 76.5% de la profondeur des rainures ici égale à 98 mm. La partie centrale s'étend de manière symétrique de part et d'autre du plan équatorial et sur une largeur totale égale à 580 mm soit environ 65% de la largeur totale W de la bande égale ici à 895 mm.

Un deuxième matériau M2 est situé sur les régions bord sur une épaisseur P2 égale à 65 mm soit 66% de la profondeur P des rainures. Dans le cas présent, les surfaces de contact entre le second matériau M2 et le premier matériau M1 sont positionnées axialement à l'extérieur des rainures circonférentielles 3.

Un troisième matériau M3 est placé radialement à l'intérieur de l'ensemble de la région centrale et des régions de bord, et s'étend sur une épaisseur au moins égale à la différence entre la profondeur P des rainures et l'épaisseur de matériau P1 de la région centrale. Dans le cas présent, l'épaisseur de ce troisième matériau varie dans la largeur de la bande de roulement et est comprise entre 17 mm (dans la région centrale) et 32 mm (sur les régions bord).

Un quatrième matériau M4 est situé radialement à l'intérieur du troisième matériau M3 sur toute la largeur W de la bande de roulement c'est-à-dire sous la partie centrale et les parties de bord. L'épaisseur de ce quatrième matériau varie dans la largeur de la bande de roulement et de façon symétrique par rapport au plan médian ; cette épaisseur est comprise entre 19 mm et 27 mm.

Ces quatre matériaux constituant la bande de roulement sont en outre choisis pour avoir les propriétés suivantes :
- le premier matériau M1 a une perte hystérétique tan(δ)ₘₐₓ égale à 0.19 et un module sécant d'élasticité à 10% d'allongement et à 23 °C égal à 4.3 MPa;
- le deuxième matériau M2 a une perte hystérétique tan(δ)ₘₐₓ égale à 0.16 et un module sécant d'élasticité à 10% d'allongement et à 23 °C égal à 3.7 MPa.
- le troisième matériau M3 a une perte hystérétique tan(δ)ₘₐₓ égale à 0.11.
- le quatrième matériau M4 a une perte hystérétique tan(δ)ₘₐₓ égale à 0.07 et un module sécant d'élasticité à 10% d'allongement et à 23 °C égal à 4.0 MPa.

En outre, le premier matériau M1 a une résistance à l'usure qui est 20% meilleure que celles des deuxième et troisième matériaux, sachant que la résistance à l'usure d'un matériau caoutchoutique est déterminée au moyen d'un test réalisé sur machine d'érosion employant des éprouvettes soumises à des conditions imposées de mise sous pression, de vitesse de glissement, de longueur glissée à température d'enceinte. On mesure la diminution de hauteur de l'éprouvette par unité de longueur glissée et la perte de masse totale.

Cette structure permet d'obtenir une protection améliorée de la partie centrale de la bande de roulement vis-à-vis des agressions en roulage.

Dans un mode de réalisation préférentiel correspondant à la variante montrée, la largeur du premier matériau formant la bande de roulement est au moins égale à la largeur de la plus grande des nappes de frettage.

L'invention n'est pas limitée aux exemples décrits et représentés et diverses modifications peuvent y être apportées sans sortir de son cadre.

## Revendications

1. Pneu destiné à équiper un véhicule portant de lourdes charges, ce pneu comprenant une armature de carcasse ancrée dans des bourrelets, cette armature de carcasse étant, radialement à l'extérieur, surmontée d'une structure sommitale (200) comprenant une armature de renforcement de sommet (20) elle même surmontée radialement à l'extérieur par une bande de roulement (10) destinée à assurer le contact par roulement avec le sol, cette bande de roulement étant pourvue, de part et d'autre d'un plan médian XX' divisant la bande en deux moitiés sensiblement de même largeur, d'une pluralité de rainures d'orientation générale transversale (2), ces rainures transversales ayant deux extrémités, une première extrémité externe (21) débouchant vers l'extérieur de la bande et une deuxième extrémité interne (22) située à l'intérieur de la bande, cette extrémité interne (22) étant située à une distance non nulle du plan médian, ces rainures transversales (2) ayant une profondeur moyenne P, la bande étant divisée axialement en une partie médiane s'étendant axialement entre les extrémités internes des rainures transversales de part et d'autre du plan médian et des parties de bord axialement à l'extérieur de la partie médiane, la partie médiane ayant une largeur Lc au moins égale à 20% de la largeur totale W de la bande de roulement et au plus 80% de cette largeur W,
cette bande de roulement étant formée par au moins trois matériaux caoutchoutiques ayant des propriétés spécifiques différentes :
- un premier matériau M1 est situé de part et d'autre du plan médian et sur une largeur totale au moins égale à 80% de la largeur Lc de la partie médiane et au plus 80% de la largeur totale W de la bande, et sur une profondeur moyenne P1 égale à au moins 20% et au plus 80% de la profondeur moyenne P des rainures transversales, cette profondeur moyenne P1 étant mesurée sur le plan médian,
- un second matériau M2 situé axialement à l'extérieur de la partie médiane sur une profondeur P2 égale ou sensiblement égale à la profondeur P1,
- un troisième matériau M3 situé radialement à l'intérieur de l'ensemble de la partie médiane et des parties de bord, ce troisième matériau s'étendant sur une profondeur au moins égale à la différence entre la profondeur moyenne P des rainures transversales et l'épaisseur P1 du premier matériau,
ledit pneu étant **caractérisé en ce que** les trois matériaux de la bande sont définis comme ayant les propriétés suivantes :
- le premier matériau M1 a un module sécant à 10% d'allongement mesuré sous une température de 23°C au moins égal à 4.0 MPa et des pertes hystérétiques tan(δ)ₘₐₓ supérieures à 0.19,
- le deuxième matériau M2 a un module sécant à 10% d'allongement, mesuré à 23 °C, inférieur à celui du premier matériau, et une valeur de pertes hystérétiques tan(δ)ₘₐₓ inférieure à celle du premier matériau et au moins égale à 0.15,
- le troisième matériau M3 a une valeur de pertes hystérétiques tan(δ)ₘₐₓ inférieure à 0.12,
- en outre, le premier matériau M1 a une résistance à l'usure qui est au moins 15% supérieure à celle du deuxième et troisième matériaux, ces deux derniers matériaux ayant sensiblement la même résistance à l'usure.

2. Pneu selon la revendication 1 **caractérisé en ce que** les surfaces de jonction entre les premier et deuxième matériaux ont, vues dans un plan de coupe contenant l'axe de rotation, des traces (12) inclinées par rapport à la direction radiale, le point radialement le plus à l'intérieur du premier matériau sur ces traces étant situé axialement à l'extérieur du point radialement le plus à l'extérieur du premier matériau.

3. Pneu selon la revendication 1 ou selon la revendication 2 **caractérisé en ce que** la bande comprend un quatrième matériau M4 situé radialement à l'intérieur du troisième matériau, ce quatrième matériau M4 ayant les caractéristiques suivantes :
- un module sécant en extension à 10% d'allongement et pour une température de 23 °C égal à 4.0 MPa,
- une valeur de pertes hystérétiques tan(δ)ₘₐₓ inférieure à 0.11.

4. Pneu selon l'une quelconque des revendications 1 à 3 **caractérisé en ce que** le troisième matériau M3 comprend une surépaisseur d'environ 20% de son épaisseur moyenne, cette surépaisseur ayant une largeur d'au moins 5 % de la largeur totale W de la bande de roulement et est située à une distance du plan médian supérieure à 10% de largeur totale W de la bande de roulement.

5. Pneu selon l'une des revendications 1 à 4 **caractérisé en ce que** la sculpture de bande de roulement est en outre pourvue avec deux rainures d'orientation générale circonférentielle (3) situées axialement aux limites de la partie centrale de la bande et telles que les rainures transversales (2) débouchent dans ces rainures circonférentielles (3), la largeur L1 sur laquelle s'étend le premier matériau M1 étant au moins égale à la largeur Lc de la partie médiane, les premier et deuxième matériaux présentant des surfaces de contact entre eux, ces surfaces de contact étant positionnées axialement à l'extérieur par rapport aux rainures circonférentielles.

## Patentansprüche

1. Reifen, der dazu bestimmt ist, ein Fahrzeug auszustatten, das schwere Lasten trägt, wobei dieser Reifen eine Karkassenbewehrung aufweist, die in Wülsten verankert ist, wobei auf dieser Karkassenbewehrung radial außerhalb eine Scheitelstruktur (200) liegt, die eine Scheitelverstärkungsbewehrung (20) aufweist, auf der wiederum radial außerhalb eine Lauffläche (10) liegt, die dazu bestimmt ist, die Berührung mit dem Boden durch Fahren sicherzustellen, wobei diese Lauffläche zu beiden Seiten einer mittleren Ebene XX', die die Lauffläche in zwei Hälften mit im Wesentlichen gleicher Breite teilt, mit einer Vielzahl von Rillen (2) mit allgemeiner Querausrichtung versehen ist, wobei diese Querrillen zwei Enden haben, ein erstes äußeres Ende (21), das außerhalb der Lauffläche mündet, und ein zweites inneres Ende (22), das in dem Inneren der Lauffläche liegt, wobei dieses innere Ende (22) in einer Entfernung nicht gleich null von der mittleren Ebene liegt, wobei diese Querrillen (2) eine mittlere Tiefe P haben, wobei die Lauffläche axial in einen mittleren Teil, der sich axial zwischen den inneren Enden der Querrillen zu beiden Seiten der mittleren Ebene und der Randteile axial außerhalb des mittleren Teils erstreckt, geteilt ist, wobei der mittlere Teil eine Breite Lc hat, die mindestens gleich 20% der Gesamtbreite W der Lauffläche und maximal 80% dieser Breite W ist,
wobei diese Lauffläche aus mindestens drei Kautschukwerkstoffen ausgebildet ist, die unterschiedliche spezifische Eigenschaften haben:
- ein erster Werkstoff M1 liegt zu beiden Seiten der mittleren Ebene und auf einer Gesamtbreite von mindestens gleich 80% der Breite Lc des mittleren Teils und maximal 80% der Gesamtbreite W der Lauffläche, und auf einer mittleren Stärke P1 gleich mindestens 20% und maximal 80% der mittleren Tiefe P der Querrillen, wobei diese mittlere Tiefe P1 auf der mittleren Ebene gemessen ist,
- ein zweiter Werkstoff M2 liegt axial außerhalb des mittleren Teils auf einer Tiefe P2 gleich oder im Wesentlichen gleich der Tiefe P1,
- ein dritter Werkstoff M3 liegt radial in dem Inneren der Einheit des mittleren Teils und der Seitenränder, wobei sich dieser dritte Werkstoff auf einer Tiefe mindestens gleich dem Unterschied zwischen der mittleren Tiefe P der Querrillen und der Stärke P1 des ersten Werkstoffs erstreckt,
wobei der Reifen **dadurch gekennzeichnet ist, dass** die drei Werkstoffe der Lauffläche als die folgenden Eigenschaften habend definiert sind:
- der erste Werkstoff M1 hat ein Sekansmodul bei 10% Längung, gemessen bei einer Temperatur von 23°C, von mindestens gleich 4,0 MPa und Hystereseverluste tan(δ)ₘₐₓ größer als 0,19,
- der zweite Werkstoff M2 hat ein Sekansmodul bei 10% Längung, gemessen bei 23°C, kleiner als das des ersten Werkstoffs, und einen Hystereseverlustwert tan(δ)ₘₐₓ kleiner als der des ersten Werkstoffs und mindestens gleich 0,15,
- der dritte Werkstoff M3 hat einen Hystereseverlustwert tan(δ)ₘₐₓ kleiner als 0,12,
- außerdem hat der erste Werkstoff M1 eine Verschleißfestigkeit, die mindestens 15% größer ist als die des zweiten und des dritten Werkstoffs, wobei diese zwei letzteren Werkstoffe im Wesentlichen dieselbe Verschleißfestigkeit haben.

2. Reifen nach Anspruch 1, **dadurch gekennzeichnet, dass** die Verbindungsoberflächen zwischen dem ersten und dem zweiten Werkstoff in einer Schnittebene gesehen, die die Rotationsachse enthält, Spuren (12) haben, die in Bezug auf die radiale Richtung geneigt sind, wobei der radiale Punkt, der am weitesten in dem Inneren des ersten Werkstoffs liegt, auf diesen Spuren axial außerhalb des radialen Punkts liegt, der am weitesten außerhalb des ersten Werkstoffs liegt.

3. Reifen nach Anspruch 1 oder nach Anspruch 2, **dadurch gekennzeichnet, dass** die Lauffläche einen vierten Werkstoff M4 aufweist, der radial innerhalb des dritten Werkstoffs liegt, wobei dieser vierte Werkstoff M4 die folgenden Merkmale hat:
- ein Sekansmodul in Dehnung bei 10% Längung und für eine Temperatur von 23°C gleich 4,0 MPa,
- einen Hystereseverlustwert tan(δ)ₘₐₓ kleiner als 0,11.

4. Reifen nach einem der Ansprüche 1 bis 3, **dadurch gekennzeichnet, dass** der dritte Werkstoff M3 eine Überdicke von etwa 20% seiner mittleren Stärke aufweist, wobei diese Überdicke eine Breite von mindestens 5% der Gesamtbreite W der Lauffläche hat und in einer Entfernung von der mittleren Ebene liegt, die größer ist als 10% der Gesamtbreite W der Lauffläche.

5. Reifen nach einem der Ansprüche 1 bis 4, **dadurch gekennzeichnet, dass** das Laufflächenprofil außerdem mit zwei Rillen mit allgemein umfänglicher Ausrichtung (3) versehen ist, die axial an den Limits des zentralen Teils der Lauffläche liegen und derart, dass die Querrillen (2) in diese umfänglichen Rillen (3) münden, wobei die Breite L1, auf der sich der erste Werkstoff M1 erstreckt, mindestens gleich der Breite Lc des mittleren Teils ist, wobei der erste und der zweite Werkstoff untereinander Berührungsoberflächen aufweisen, wobei diese Berührungsoberflächen axial außerhalb in Bezug auf die umfänglichen Rillen positioniert sind.

## Claims

1. Tyre intended to be fitted to a vehicle carrying heavy loads, this tyre comprising a carcass reinforcement anchored in beads, this carcass reinforcement being, radially on the outside, capped by a crown structure (200) comprising a crown reinforcement (20) itself capped radially on the outside by a tread strip (10) intended to provide rolling contact with the ground, this tread strip being provided, on each side of a median plane XX' that divides the strip into two halves of substantially the same width, with a plurality of grooves (2) of transverse overall orientation, these transverse grooves having two ends, an outer first end (21) opening to the outside of the tread strip and an inner second end (22) situated on the inside of the tread strip, this inner end (22) being situated a non-zero distance away from the median plane, these transverse grooves (2) having a mean depth P, the tread strip being split axially into a middle part extending axially between the inner ends of the transverse grooves on each side of the median plane and edge parts axially on the outside of the median part, the median part having a width Lc at least equal to 20% of the total width W of the tread strip and at most equal to 80% of this width W,
this tread strip being formed of at least three rubber materials with different specific properties:
- a first material M1 is situated on each side of the median plane and over a total width at least equal to 80% of the width Lc of the median part and at most equal to 80% of the total width W of the tread strip, and over a mean depth P1 equal to at least 20% and at most 80% of the mean depth P of the transverse grooves, this mean depth P1 being measured on the median plane,
- a second material M2 situated axially on the outside of the median part over a depth P2 equal or substantially equal to the depth P1,
- a third material M3 situated radially on the inside of the combination of the median part and of the edge parts, this third material extending over a depth at least equal to the difference between the mean depth P of the transverse grooves and the thickness P1 of the first material,
this tyre being **characterized in that** these three tread strip materials are defined as having the following properties:
- the first material M1 has a secant modulus at 10% elongation measured at a temperature of 23°C at least equal to 4.0 MPa and hysteresis losses tan(δ)ₘₐₓ greater than 0.19,
- the second material M2 has a secant modulus at 10% elongation, measured at 23°C, lower than that of the first material, and a hysteresis losses value tan(δ)ₘₐₓ lower than that of the first material and at least equal to 0.15,
- the third material M3 has a hysteresis losses value tan(δ)ₘₐₓ lower than 0.12,
- and furthermore, the first material M1 has a resistance to wear which is at least 15% better than that of the second and third materials, the latter two materials having substantially the same resistance to wear.

2. Tyre according to Claim 1, **characterized in that** the surfaces at the junctions between the first and second materials have, when viewed in a plane of section containing the axis of rotation, plots (12) which are inclined with respect to the radial direction, the radially innermost point of the first material on these plots lying axially on the outside of the radially outermost point of the first material.

3. Tyre according to Claim 1 or according to Claim 2, **characterized in that** the tread strip comprises a fourth material M4 situated radially on the inside of the third material, this fourth material M4 having the following features:
- a secant extension modulus at 10% elongation and at a temperature of 23°C of 4.0 MPa,
- a hysteresis losses value tan(δ)ₘₐₓ lower than 0.11.

4. Tyre according to any one of Claims 1 to 3, **characterized in that** the third material M3 comprises an additional thickness representing approximately 20% of its mean thickness, this additional thickness having a width of at least 5% of the total width W of the tread strip and lying a distance away from the median plane that exceeds 10% of the total width W of the tread strip.

5. Tyre according to one of Claims 1 to 4, **characterized in that** the tread pattern on the tread strip is further provided with two grooves (3) of circumferential overall orientation which are situated axially at the extremes of the central part of the tread strip such that the transverse grooves (2) open into these circumferential grooves (3), the width L1 over which the first material M1 extends being at least equal to the width Lc of the median part, the first and second materials having mutual-contact surfaces, these contact surfaces being positioned axially on the outside in relation to the circumferential grooves.
